# NEW EUROPEAN PATENT SPECIFICATION

(11) **EP 0 194 002 B2**
(45) Date of publication and mention of the opposition decision: **09.06.1993**
(45) Mention of the grant of the patent: 07.09.1988
(21) Application number: 86300140.0
(22) Date of filing: 10.01.1986
(51) Int. Cl.: G01B 21/04

(54) **A bridge type co-ordinate measuring machine**
Brückenartige Koordinatenmessmaschine
Machine de mesure de façon d'un portique

(30) Priority: 24.01.1985 US 694377; 24.01.1985 US 694378
(43) Date of publication of application: 10.09.1986
(73) Proprietor: THE WARNER & SWASEY COMPANY, Cleveland Ohio 44106 (US)
(72) Inventor: Brandstetter, Robert William, Fairborn State of Ohio 45324 (US); Raleigh, Freddie Lewis, State of Ohio 45459 (US)
(74) Representative: Schaumburg, Thoenes & Thurn

(56) References cited:
- DE-A- 2 744 687
- SU-A- 621 955
- SU-A- 684 282
- US-A- 4 229 866

## Description

This invention relates to a bridge type coordinate measuring machine (CMM) for measuring the dimensions of a workpiece.

A bridge type co-ordinate measuring machine is generally comprised of a base, a bridge moveably mounted to the base, a carriage moveably mounted to the upper portion of the bridge, a probe moveably mounted to the carriage and a measuring and computation system that responds to movement of the probe for measuring the dimensions of a workpiece located on the upper surface of the base. Examples of bridge type co-ordinate measuring machines may be found in U.S. patents: 3,749,501 entitled "Measuring Machine" issued July 31, 1973; and 3,840,993 entitled "Co-ordinate Measuring Machine" issued October 15,1974. The important functions of a co-ordinate measuring machine are its accurate measurement and its repeatability i.e. ability to repeat or obtain the same measurement from the same workpiece. In a bridge type co-ordinate measuring machine accuracy and repeatability may be adversely affected by vibration and relative movement between the uprights of the bridge. Poor stiffness or rigidity of the bridge permits relative movement between the uprights of the bridge while height, spacing and stiffness all affect resonant frequency, which if low, makes the measuring probe mounted on the bridge more susceptible to vibrations.

One approach to minimizing or dampening the effect of vibrations on a CMM has been to mount the CMM on an air bag apparatus or large concrete platform or increase the mass of the bridge uprights. These approaches are expensive, space consuming and only isolate external vibrations i.e., ground vibrations. Internal vibrations e.g., caused by electro mechanical servo mechanisms mounted on the machine, would not be isolated or dampened.

One approach to minimizing the effect of relative movement between the bridge uprights is discussed in the 3,749,501 patent where a position indicator is located on each upright. However, this increases the cost for the positional and measurement apparatus of the CMM and still does not address the problems of an undesirable low resonant frequency that can be present in a bridge structure e.g. a resonant frequency below 20 Hertz can adversely effectthe measuring accuracy of a CMM.

Another approach to improving the accuracy of a CMM is having a square bridge with a portal. Such a CMM is described in Russian patent 621,955 issued August 30, 1978. A CMM according to this statement of Claim 1 is known from this prior art document.

Accordingly, the accuracy of the measurements made by a bridge type co-ordinate measuring machine may be adversely affected by poor rigidity and vibrations because of a low resonant frequency of the bridge. This is especially true of a bridge type CMM used for measuring large workpieces, such as an automobile body or engine, because of the height and spacing of the uprights of such a bridge e.g. about one to two metres high with one and a half to two and a half metre spacing.

According to the invention a bridge type co-ordinate measuring machine as defined in Claim 1 is provided

In one variation of the invention it is preferable to have the lower member of the bridge, that is connected to the uprights, located above the ways on the base, along which the bridge moves. With the lower horizontal connecting member of the bridge above the ways, rather than below the ways, the distance between the upper and lower horizontal bridge members is shortened without changing the work space available between the upper bridge member and the upper surface of the base. This arrangement provides for easy assembly of the bridge onto the base.

The machine of the present invention may result in one or more of the following advantages:-
(i) improvement of the measuring accuracy of a CMM used for measuring large workpieces such as automobile engine blocks and automobile body parts;
(ii) improvement of the rigidity of the bridge of a CMM;
(iii) reduction in the relative movement between the uprights of the bridge of a CMM, especially when the uprights have a height greater than 1 metre;
(iv) lowering of the effect of vibrations on the probe mounted on the bridge of a CMM by increasing the resonant frequency of the bridge;
(v) minimizing of the need for an expensive system to isolate the measuring probe of a CMM from external vibrations;
(vi) elimination of the sag effect that a heavy workpiece, placed in the upper surface of the base, has upon the ways.

The invention will now be further described by way of example, with reference to and as illustrated in the accompanying drawings, in which:-
Figures 1 and 2 are perspective views of a bridge type co-ordinate measuring machine incorporating the principles of this invention;
Figure 3 is a cutaway view of a CMM showing one arrangement of the bridge mounted to the base of a CMM and
Figures 4 and 5 are mounting arrangements of the bridge onto the base of a CMM.

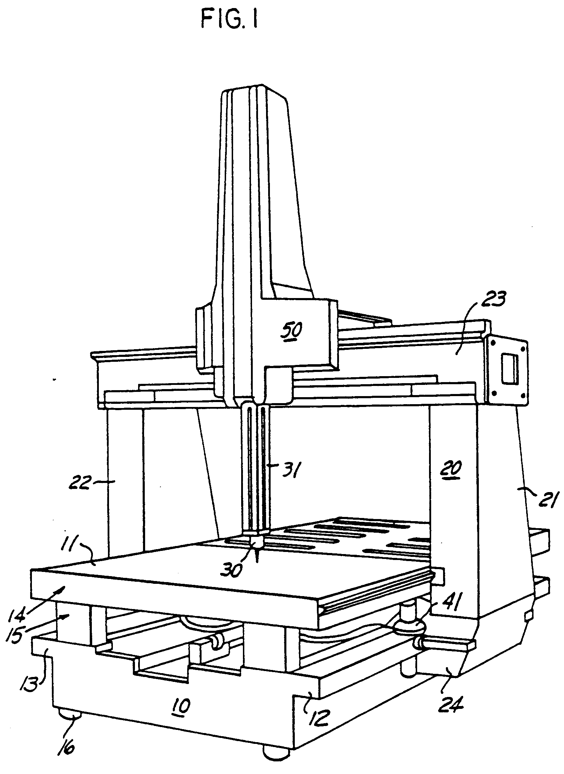

Referring now to the drawings, Figure 1 illustrates a bridge type co-ordinate measuring machine of the type having a base 10, a bridge 20 moveably mounted to the base 10, a carriage 50 moveably mounted to the bridge 20, and a probe 30 moveably mounted to the carriage 50. The base 10 includes an upper surface 11 upon which a workpiece (not shown) to be measured is located, and guidewayx 12, 13. The base 10 is divided into an upper table portion 14 separated from the lower portion by legs 15. Rubber feet 16 at the bottom of the base 10, minimize the effect of external vibrations on the CMM. This arrangement of the guideways 12, 13 and legs 15 provides space, if desired, for a motor and suitable drive mechanism for moving the bridge 20 to be located at the centre of the base 10. The bridge 20 includes two uprights 21, 22 connected together by an upper member 23 and a lower member 24. Moveably mounted on the upper member 23 of the bridge 20 is the carriage 50 which has moveably mounted thereto a probe shaft 31 having the probe 30 at one end thereof. The probe 30 is generally of the type that, upon contact with a piece to be measured, provides a signal to an appropriate computation and measuring apparatus. One example of such a probe may be found in U.S. Patent 4,270,275 entitled "Probes" and issued June 6, 1981. The bridge 20 is moveably mounted to the base 10 along guideways 12, 13, the surfaces of which interface with bearings 41 mounted in respective channels 25 in the bridge 20. Preferably, air bearings 41 are used to facilitate movement of the bridge 20 along the guideways 12, 13 of the base 10. Movement of the bridge, carriage and probe shaft 31 allows the probe to move and take measurements in three dimensions. Electrical or mechanical means responsive to movement of the probe indicate the position of the probe in 3 co-ordinates and, when required, calculate measurements e.g., The Warner and Swasey Company, Sheffield Measurement Division measurement processor model MP3.

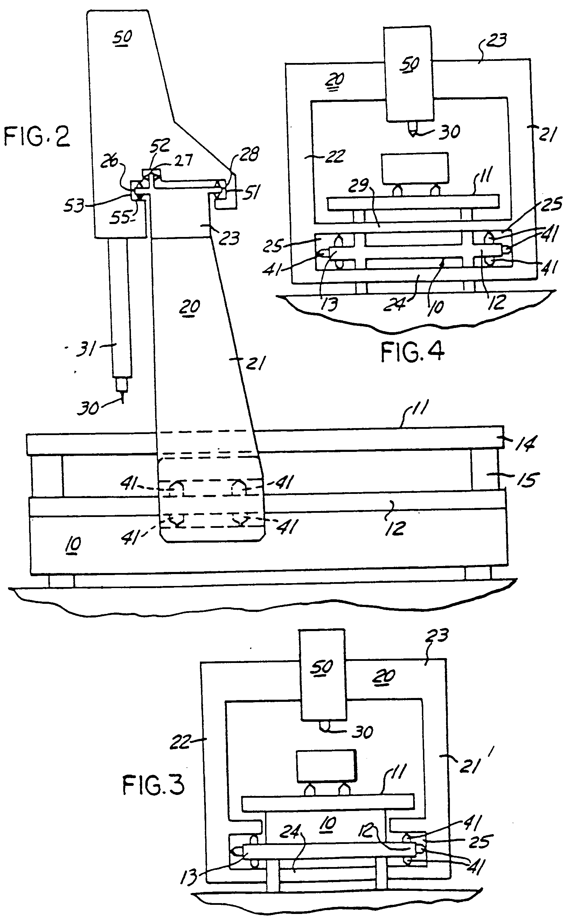

Figure 2 illustrates how the carriage 50 is moveably mounted to the upper member 23 of the bridge 20 along guideways 26, 27, 28, the surfaces of which interface with bearings 55 in respective channels 51, 52, 53 in the carriage 50. The probe 30 is mounted to the bridge 20 for movement along two axes and is moveable along a third axis by movement of the bridge. Mounting arrangements for the probe and carriage are described in further detail in the 3,749,501 and 3,840,993 patents. Mechanical or preferably air bearings 55 are used to facilitate movement of the carriage 50 relative to the bridge 20. Also shown is the arrangement of the upper and lower bearings 41 of the bridge 20 that coact with the surfaces of one of the guideways 12 of the base 10.

Figure 3 illustrates further details of how the air bearings 41, located in channels 25 in the bridge 20, interface with the surfaces of the guide ways 12, 13 of the base 10. In this embodiment of the invention, the lower member 24 of the bridge 20 is located below the bearings 41 and below the table portion 14 of the base 10. The upper table portion 14 of the base 10 is supported by only three legs 15. This provides better vibration and deflectional isolation than would four legs i.e., one in each corner of the table 14.

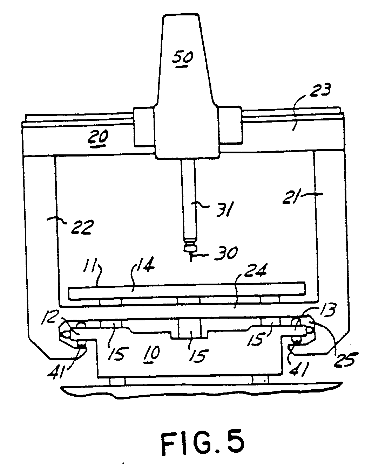

Figure 4 illustrates an alternate embodiment of the invention wherein the bridge 20 has two lower connecting members 24, 29 with the bearings 41 coacting with the guideways 12,13 of the base 10 located between the two lower members 24, 29 of the bridge 20.

Figure 5 illustrates further details of how the air bearings 41, located in channels 25 in the bridge 20, interface with the surfaces of the guide ways 12, 13 of the base 10. In this preferred embodiment, the lower member 24 of the bridge 20 is located above the ways 12, 13 and below the table portion 14 of the base 10. The upper table portion 14 of the base 10 is supported by only three legs 15. This provides better vibrational and deflectional isolation than would four legs i.e., one in each corner of the table 14.

## Claims

1. A bridge type coordinate measuring machine of the type having: a base (10) that includes a horizontal table surface (11) for supporting a workpiece to be measured; a bridge (20) having a closed loop configuration that encircles the table surface (11), said closed loop configuration formed by two uprights (21, 22), a first member (23) connecting the uprights (21, 22) together above the horizontal table surface (11), and a second member (24) connecting together the uprights (21, 22) of the bridge (20) below the table surface (11) ; means (11, 13, 41) for moveably mounting the bridge (20) to the base (10) for movement of the entire bridge (20) along a first horizontal axis, including a pair of guideways (12, 13), coacting with a plurality of bearing means (41) operating upwardly, downwardly and laterally, said guideways and bearing means located below the horizontal table surface (11), one (12) of said guideways (12,13) and its respective bearing means (41) located at one side of said base (10) and the other of said guideways (13) and its respective bearing means (41) located at the opposite side of said base (10); a probe (30); and means (50, 31) for mounting said probe (30) to said first member (23) of said bridge (20) for movement along a second horizontal axis and a vertical axis, said first horizontal axis, said second horizontal axis and said vertical axis orthogonally arranged to enable said probe (30) to measure a workpiece positioned on the horizontal table surface (11), characterized in that said guideways (12, 13) protrude laterally from said base (10) forming upper, lower and lateral bearing surfaces, in that each of said bearing means (41) comprises two bearing means acting downwardly and upwardly against said upper and lower bearing surfaces and one bearing means acting inwardly against said lateral bearing surface, said bearing means (41) being arranged to transmit bearing forces between said bridge (20) and said base (10) symmetrically; and in that said second member (24,29) of said bridge (20) forms part of two channels (25) in the bridge (20) in which said bearing means (41) are mounted.

2. A coordinate measuring machine as claimed in claim 1, wherein each of said guideways located at one side of the base includes a vertically extending bearing surface and two opposing horizontally extending bearing surfaces connected together by the vertically extending surface.

3. A coordinate measuring machine as claimed in claim 1 or 2, wherein the bearing means (41) are located in the space between the vertical axes of the uprights (21, 22).

4. A coordinate measuring machine as claimed in anyone of claims 1 to 3, wherein said second member (24) is located below the table surface (11) and above the bearing means (41).

5. A coordinate measuring machine as claimed in anyone of claims 1 to 4, wherein the height of the uprights (21,22) of the bridge is greater than one metre.

## Patentansprüche

1. Brückenartige Koordinatenmeßmaschine mit einer Grundeinheit (10) mit horizontaler Tischfläche (11) zum Aufnehmen eines zu messenden Werkstükkes; mit einer eine geschlossene Anordnung bildenden Brücke (20), welche die Tischfläche (11) umschließt, wobei die geschlossene Anordnung durch zwei Säulen (21,22), ein erstes Brückenelement (23) zum Verbinden der Säulen (21, 22) oberhalb der horizontalen Tischfläche (11) und ein zweites Brückenelement (24) zum Verbinden der Säulen (21, 22) unterhalb der Tischfläche (11) gebildet ist; mit Einrichtungen (12, 13, 41) zur verschiebbaren Montage der Brücke (20) an der Grundeinheit (10) zwecks Verschiebens der gesamten Brücke (20) entlang einer ersten horizontalen Achse auf einem Paar Führungsbahnen (12, 13), die mit einer Vielzahl Lagermittel (41) in Aufwärts-, Abwärts- und seitlicher Richtung zusammenwirken und zusammen mit diesen unterhalb der horizontalen Tischfläche (11) angeordnet sind, wobei eine (12) dieser Führungsbahnen (12, 13) und ihr zugehörige Lagermittel (41) sich auf einer Seite der Grundeinheit (10) und die andere Führungsbahn (13) und ihr zugehörige Lagermittel (41) sich auf der gegenüberliegenden Seite der Grundeinheit (10) befinden; mit einem Meßkopf (30); sowie mit Vorrichtungen (50, 31) zum Halten des Meßkopfes (30) an dem ersten Brückenelement (23) der Brücke (20) verschiebbar entlang einer zweiten horizontalen sowie einer vertikalen Achse, wobei die erste horizontale, die zweite horizontale und die vertikale Achse orthogonal zueinanderangeordnet sind, um dem Meßkopf (30) das Messen eines auf der horizontalen Tischfläche (11) liegenden Werkstückes zu ermöglichen, dadurch gekennzeichnet, daß die Führungsbahnen (12, 13) seitlich von der Grundeinheit (10) abstehen und obere, untere und seitliche Lagerflächen bilden, daß jedes der Lagermittel (41) zwei abwärts und aufwärts gegen die obere und die untere Lagerfläche wirkende Lager und ein nach innen gegen die seitliche Lagerfläche wirkendes Lager umfassen, daß die Lagermittel (41) so angeordnet sind, daß sie Lagerkräfte zwischen der Brücke (20) und der Grundeinheit (10) symmetrisch übertragen; und daß das zweite Brückenelement (24, 29) der Brücke (20) einen Teil zweier Kanäle (25) in der Brücke (20) bildet, in denen die Lagermittel (41) montiert sind.

2. Koordinatenmeßmaschine nach Anspruch 1, bei der jede der auf einer Seite der Grundeinheit (10) befindlichen Führungsbahnen (12, 13) eine vertikal verlaufende Fläche sowie zwei einander gegenüberliegende und waagerecht verlaufende Lagerflächen aufweist, die durch die vertikal verlaufende Fläche miteinander verbunden sind.

3. Koordinatenmeßmaschine nach Anspruch 1 oder 2, bei der die Lagermittel (41) innerhalb des Bereiches zwischen den vertikalen Achsen der Säulen (21, 22) angeordnet sind.

4. Koordinatenmeßmaschine nach einem der Ansprüche 1 bis 3, bei der das zweite Brückenelement (24) unterhalb der Tischfläche (11) und oberhalb der Lagermittel (41) angeordnet ist.

5. Koordinatenmeßmaschine nach einem der Ansprüche 1 bis 4, bei der die Höhe der Säulen (21, 22) der Brücke (20) größer als ein Meter ist.

## Revendications

1. Machine de mesure de coordonnées de type à portique comprenant : une base (10) comportant une surface de plateau horizontal (11) destinée à supporter une pièce de travail à mesurer; un portique (20) présentant une configuration en boucle fermée entourant la surface de plateau (11), cette configuration en boucle fermée étant constituée de deux montants (21, 22), d'un premier élément (23) reliant les montants (21,22) l'un à l'autre au-dessus de la surface de plateau horizontale (11), et d'un second élément (24) reliant les montants (21,22) du portique (20) l'un à l'autre au-dessous de la surface de plateau (11); des moyens (12, 13,41) pour monter le portique (20) de façon qu'il puisse se déplacer dans son ensemble sur la base (10) le long d'un premier axe horizontal, comprenant une paire de chemins de guidage (12, 13) coopérant avec un certain nombre de moyens de pièces portantes (41) agissant vers le haut, vers le bas et vers le côté, ces chemins de guidage et ces moyens de pièces portantes étant situés au-dessous de la surface de plateau horizontale (11), l'un (12) des chemins du guidage (12, 13) et ses moyens de pièces portantes correspondants (41) étant situés d'un côté de la base (10), et l'autre chemin de guidage (13) avec ses moyens de pièces portantes correspondants (41) étant situés du côté opposé de la base (10); une sonde (30), et des moyens (50, 31 ) pour monter cette sonde (30) sur le premier élément (23) du portique (20) de façon qu'elle puisse se déplacer le long d'un second axe horizontal et d'un axe vertical, le premier axe horizontal, le second axe horizontal et l'axe vertical étant disposés orthogonalement pour permettre à la sonde (30) de mesurer une pièce à travailler placée sur la surface de plateau horizontale (11), caractérisée en ce que les chemins de guidage (12, 13) dépassent latéralement de la base (10) formant des surfaces portantes hautes, basses et latérales, en ce que chacun des moyens de pièces portantes (41) comprend deux moyens de pièces portantes agissant vers le bas et vers le haut contre les surfaces portantes hautes et basses et un moyen de pièce portant agissant vers l'intérieur contre la surface portante latérale, les moyens de pièces portantes (41) étant arrangés pour transmettre, de façon symmétrique, des forces portantes entre le portique (20) et la base (10); en ce que le second élément (24, 29) de la portique (20) fait partie de deux passages (25) dans le portique (20) dans lequel les moyens de pièces portantes (41) sont montés.

2. Machine de mesure de coordonées selon la revendication 1, caractérisée en ce que chacun des chemins de guidage, placé d'un côté de la base, comprend une surface portante disposée verticalement et deux surfaces portantes horizontales opposées reliées ensemble par la surface disposée verticalement.

3. Machine de mesure de coordonées selon l'une quelconque des revendications 1 ou 2, caractérisée en ce que les moyens de pièces portantes (41) sont placés dans l'espace compris entre les axes verticaux des montants (21, 22).

4. Machine de mesure de coordonées selon l'une quelconque des revendications 1, 2 ou 3, caractérisée en ce que le second élément (24) est placé au-dessous de la surface de plateau (11) et au-dessus des moyens de pièces portantes (41).

5. Machine de mesure de coordonées selon l'une quelconque des revendications 1 à 4, caractérisée en ce que la hauteur des montants (21, 22) du portique (20) est supérieure à un mètre.
